# EUROPEAN PATENT APPLICATION

(11) **EP 2 258 505 A1**
(43) Date of publication of application: **08.12.2010**
(21) Application number: 09727276.9
(22) Date of filing: 31.03.2009
(51) Int. Cl.: B23C 5/10, B23C 5/20

(54) **RADIUS END MILL AND CUTTING INSERT**

(30) Priority: 31.03.2008 JP 2008089677
(71) Applicant: Mitsubishi Materials Corporation, Chiyoda-ku Tokyo 100-8117 (JP)
(72) Inventor: ABE, Taro, Joso-shi Ibaraki 300-2795 (JP)
(74) Representative: HOFFMANN EITLE
(86) International application number: PCT/JP2009/056654
(87) International publication number: WO 2009/123189

(57) **Abstract**

A radius end mill including an end mill body which is rotated around an axis thereof; a chip discharge flute being provided at an outer periphery of a tip portion of the end mill body; a gash being provided at a tip portion of the chip discharge flute; a rake face being formed on a wall face facing an end-mill rotational direction in the chip discharge flute or the gash; a cutting edge being formed on the rake face; the cutting edge including an end cutting edge, an outer peripheral cutting edge, and a convex circular-arc-shaped corner cutting edge; the end cutting edge being formed at a side ridge portion on the tip portion of the rake face; the outer peripheral cutting edge being formed at a side ridge portion on the outer peripheral side of the rake face; the convex circular-arc-shaped corner cutting edge being formed at a corner side ridge portion formed by the end cutting edge and the outer peripheral cutting edge; a chip breaker being formed on a side ridge portion of the rake face at least along the corner cutting edge so as to have a convex circular-arc shape extending parallel to the corner cutting edge at the portion along the corner cutting edge; the chip breaker having a groove bottom face lower than respect to the rake face, and a groove wall face which rises from the groove bottom face and is connected to the rake face; and at both ends of the chip breaker on the side of the end cutting edge and on the side of the outer peripheral cutting edge, the groove bottom face rising to connect with the rake face in a direction along the end cutting edge or the outer peripheral cutting edge at the end, or the groove bottom face extends so as to be parallel to the rake face and the chip breaker is opened.

## Description

### TECHNICAL FIELD

The present invention relates to a radius end mill provided with a cutting edge having an end cutting edge, an outer peripheral cutting edge, and a convex circular-arc-shaped corner cutting edge at an outer periphery of a tip portion of an end mill body, and a cutting insert to be detachably attached to such a radius end mill of an indexable type.
Priority is claimed on Japanese Patent Application No. 2008-089677, filed March 31, 2008, the content of which is incorporated herein by reference.

### BACKGROUND ART

For example, as a radius end mill used for cutting work materials, such as a die, a radius end mill of the following structure and a cutting insert to be detachably attached to such a radius end mill of an indexable type are disclosed in Patent Document 1. This radius end mill has a tool body, and an outer periphery of a tip portion of this tool body is formed with a chip discharge flute which is spirally twisted. A planar main gash face where the angle of inclination with respect to the axis of the tool body is smaller than the helix angle of the chip discharge flute is formed on the inner peripheral side of a tip portion of the wall face of this chip discharge flute which faces the rotational direction of the tool body. An end cutting edge is formed at the tip of this main gash face, and a planar auxiliary gash face where the angle of inclination with respect to the axis is made greater than that of the main gash face and made smaller than the helix angle is formed on the outer peripheral side of the main gash face so as to be lower than the main gash face via a stepped portion which extends substantially perpendicularly to the end cutting edge. A corner cutting edge which has a substantially convex circular-arc shape from the tip of this auxiliary gash face to the outer periphery thereof is connected to the outer peripheral side of the end cutting edge. An outer peripheral cutting edge is formed at a side ridge portion on the outer peripheral side of the wall face of the chip discharge flute so as to be connected to a rear end of the corner cutting edge.

In such a radius end mill, the cutting edge strength which is enough to resist a cutting load can be secured by increasing the wedge angle, high sharpness can be given to the corner cutting edge, cutting resistance can be reduced. In addition, chip processability can be improved even if chips tend to get long when the chips flow out, by crashing chips generated in the portion of the corner cutting edge, particularly from a protruding end of a corner portion to the outer peripheral cutting edge thereof, into the stepped portion between the auxiliary gash face and the main gash face.
[Patent Document 1] PCT International Publication No. WO 2004/058438

### DISCLOSURE OF INVENTION

### PROBLEMS TO BE SOLVED BY THE INVENTION

Meanwhile, in a radius end mill disclosed in the Patent Document 1, first, the auxiliary gash face is made to be lower than the main gash face via the stepped portion which extends substantially perpendicularly to the end cutting edge as described above, and the rear end of this auxiliary gash face only intersects the wall face of the chip discharge flute, which is twisted at a larger angle than the angle of inclination of the auxiliary gash face, at an obtuse angle. For this reason, the chips which are generated at the corner cutting edge especially on the side of the end cutting edge and flow out toward the rear end side are not made to sufficiently collide with the stepped portion and flow out to the chip discharge flute as they tend to stretch. As a result, there is a probability that it may become difficult to achieve positive chip processing. On the other hand, the stepped portion extends substantially perpendicularly to the end cutting edge from an intersection point between the end cutting edge and the corner cutting edge, and the distance between the stepped portion and the portion of the corner cutting edge on the side of the outer peripheral cutting edge is large. Therefore, there is also a possibility that chips generated at the corner cutting edge on the side of the outer peripheral cutting edge also tend to stretch and may ride over the stepped portion before colliding with the stepped portion.

Additionally, it is not easy to form the stepped portion such that the tip thereof exactly coincides with the intersection point between the corner cutting edge and the end cutting edge. In some instances, there is a possibility that a level difference may be caused between the corner cutting edge and the end cutting edge at this intersection point, and machining accuracy may thus deteriorate due to this level difference, any damage, such as loss or chipping, may be caused at the cutting edge, and the life of tools may thus be lowered. Moreover, the auxiliary gash face is lower than the main gash face through the stepped portion in this way and becomes discontinuous. Thus, even if the corner cutting edge and the end cutting edge are formed so as to smoothly touch each other at the intersection point at the tip of the stepped portion, chips generated over the intersection point between the corner cutting edge and the end cutting edge also flow out so as to be divided along an outflow direction at the stepped portion. As a result, there is also a probability that the chips divided in this way may be entangled together, and chip processability may deteriorate instead.

Meanwhile, the auxiliary gash face and the wall face of the chip discharge flute which is used as a rake face of the outer peripheral cutting edge forms an intersection ridgeline, and intersect each other at an obtuse angle as described above, and an outer peripheral end of the intersection ridgeline becomes an intersection point between the corner cutting edge and the outer peripheral cutting edge. However, if the width of chips generated particularly by the outer peripheral cutting edge is large, chips generated over this intersection point flow out like being dragged by the chips generated by this outer peripheral cutting edge, and chips generated by the corner cutting edge may also hardly contact with the stepped portion. As a result, there is also a probability that favorable chip processability cannot be likewise obtained.

The invention was made under such a background, and the object of the invention is to provide a radius end mill capable of reliably processing chips generated by a cutting edge, including chips generated over an intersection point with the portion of a corner cutting edge on the side of an end cutting edge or a end cutting edge, chips generated over an intersection point with of the portion of the corner cutting edge on the side of the outer peripheral cutting edge or an outer peripheral cutting edge, chips generated by the periphery of a protruding end of a corner cutting edge without causing deterioration of machining accuracy or lowering of the life of tools, and a cutting insert for an indexable radius end mill.

### MEANS FOR SOLVING THE PROBLEMS

In order to solve the above problems and achieve the above object, a radius end mill of a first aspect of the invention is a radius end mill including an end mill body which is rotated around an axis thereof; a chip discharge flute being provided at an outer periphery of a tip portion of the end mill body; a gash being provided at a tip portion of the chip discharge flute; a rake face being formed on a wall face facing an end-mill rotational direction in the chip discharge flute or the gash; a cutting edge being formed on the rake face; the cutting edge including an end cutting edge, an outer peripheral cutting edge, and a convex circular-arc-shaped corner cutting edge; the end cutting edge being formed at a side ridge portion on the tip portion of the rake face; the outer peripheral cutting edge being formed at a side ridge portion on the outer peripheral side of the rake face; the convex circular-arc-shaped corner cutting edge being formed at a corner side ridge portion formed by the end cutting edge and the outer peripheral cutting edge; a chip breaker being formed on a side ridge portion of the rake face at least along the corner cutting edge so as to have a convex circular-arc shape extending parallel to the corner cutting edge at the portion along the corner cutting edge; the chip breaker having a groove bottom face lower than the rake face, and a groove wall face which rises from the groove bottom face and is connected to the rake face; and at both ends of the chip breaker on the side of the end cutting edge and on the side of the outer peripheral cutting edge, the groove bottom face rising to connect with the rake face in a direction along the end cutting edge or the outer peripheral cutting edge at the end, or the groove bottom face extends so as to be parallel to the rake face and the chip breaker is opened.

According to such a radius end mill, first, a chip breaker formed at least along the corner cutting edge on the side of the side ridge portion of the rake face is formed so as to have a convex circular-arc shape extending parallel to, i.e., extending in parallel with the corner cutting edge in a portion along the corner cutting edge. Thereby, the distance between the groove wall face of this chip breaker, and the corner cutting edge, i.e., the groove width of the chip breaker, can be made substantially uniform in a direction along the corner cutting edge. Accordingly, the groove wall face of the chip breaker can be arranged at almost regular intervals immediately on the inner peripheral side of a convex circular arc formed by the corner cutting edge. Thus, not only chips generated at the protruding end of the corner cutting edge, but also chips generated on the side of the end cutting edge and outer peripheral cutting edge can be reliably processed by making the chips collide with the groove wall face, thereby giving resistance to the chips to curl the chips.

Also, the chip breaker is formed on both ends of the chip breaker on the side of the end cutting edge and the outer peripheral cutting edge such that the groove bottom face of the chip breaker rises so as to connect with the rake face in a direction along the end cutting edge or along the outer peripheral cutting edge at the end, or the groove bottom face extends so as to be parallel to the rake face and the chip breaker is opened. Here, when the end of the chip breaker is formed such that the groove bottom face of the chip breaker rises so as to connect with the rake face, a level difference is not caused in the portion where the groove bottom face and the rake face are continuous with each other, and deterioration of machining accuracy and lowering of the life of tools can be prevented. Additionally, even if chips are generated over this continuation portion, the chips are not divided along an outflow direction, and the chips are not divided due to a level difference. Accordingly, there is no case where the chips divided in this way are entangled together, and processability is obstructed.

Additionally, even when the chip breaker is opened in a direction along the end cutting edge or the outer peripheral cutting edge at the end of the chip breaker such that the groove bottom face does not intersect the rake face, but is parallel to (i.e., extends in parallel with) the rake face, the groove wall face which rises so as to face the outflow direction of chips is only left between the groove bottom face and the rake face, a stepped portion which runs along the outflow direction of the chips is not formed, and the cutting edge also becomes a termination end in the portion where the chip breaker is opened. Therefore, chips generated by this cutting edge can be can be processed entirely by making the chips collide with the groove wall face. Accordingly, according to the radius end mill of the above configuration, at least within a range along the corner cutting edge in which such a chip breaker is formed, chips generated by the cutting edge can be reliably processed in any portion, and smooth cutting can be promoted.

Here, such a chip breaker may be one in which the groove bottom face rises and connects with the rake face at both ends of the chip breaker on the side of the end cutting edge and the outer peripheral cutting edge, and may be one in which the chip breaker is opened such that the groove bottom face and the rake face are parallel to each other at both ends. Moreover, the chip breaker may be one in which the groove bottom face rises and connects with the rake face at any one of the end of the chip breaker on the side of an end cutting edge and the end of the chip breaker on the side of the outer peripheral cutting edge, and the chip breaker is opened such that the groove bottom face and the rake face are parallel to each other at the other end. In this case, even if the chip breaker is one in which the groove bottom face rises and connects with the rake face at the end of the chip breaker on the side of the end cutting edge, and the chip breaker is opened such that the groove bottom face and the rake face are parallel to each other at the end of the chip breaker on the side of the outer peripheral cutting edge, or on the contrary, the chip breaker may be one in which the groove bottom face rises and connects with the rake face at the end of the chip breaker on the side of the outer peripheral cutting edge, and the chip breaker is opened such that the groove bottom face and the rake face are parallel to each other at the end of the chip breaker on the side of the end cutting edge.

Additionally, since chips generated in the vicinity of the protruding end of the corner cutting edge originally have a circular-arc plate-shaped cross-section, they are easily curled and divided when the chips are made to collide with the groove wall face of the chip breaker. In contrast, chips generated at the portion of the corner cutting edge on the side of the end cutting edge in, for example, slot milling, becomes small in the thickness of chips, and stretches easily, while chips generated at the portion of the corner cutting edge on the side of the outer peripheral side in, for example, side milling, becomes small likewise in the thickness of the chip and stretch easily when the depth of cut in a radial direction is small. As a result, there is a possibility that both the chips tend to stretch and ride over the groove wall face.

For this reason, it is desirable that the chip breaker be formed such that the groove width thereof becomes small at one end thereof on the side of at least one of the end cutting edge and the outer peripheral cutting edge which become an end of the corner cutting edge. Thereby, it becomes possible to make generated chips collide with the groove wall face in a position closer to the cutting edge. Thereby it becomes possible to curl the chips as small ones. Even when chips are thin, the chips can be divided and processed.
Moreover, it is desirable that the chip breaker extends to the outer peripheral cutting edge so that positive chip processing can be performed by the chip breaker even when cutting of the depth of cut being large is performed to a work material.

Meanwhile, in the radius end mill described in the Patent Document 1, the auxiliary gash face is formed in a planar shape which is gradually lower toward the rear side in a tool rotational direction as it approaches the rear end side in the direction of the axis of the tool body. Therefore, the axial rake angle of the corner cutting edge formed at the side ridge portion is also set to a positive angle, the end cutting edge is arranged on a so-called core, and the radial rake angle of the end cutting edge is set to a negative angle. Thus, the radial rake angle of the corner cutting edge connected to this end cutting edge is also set to a negative angle on the side of the end cutting edge, and increases toward the positive angle as it approaches the outer peripheral cutting edge.

Accordingly, in such a radius end mill, the cutting edge inclination angle of the corner cutting edge or a normal rake angle in a cross-section perpendicular to the cutting edge changes gradually along the corner cutting edge. Particularly, the normal (right) rake angle changes at first increases to the negative angle from the end cutting edge toward the outer peripheral cutting edge, and then increases to the positive angle. Therefore, there is a possibility that the cutting resistance increases locally and stable cutting becomes difficult, or that cutting edge strength does not become constant and fractures easily arise. Additionally, as the cutting edge inclination angle changes, chip discharge performance also differs locally.

Thus, in the invention, it is preferable that the corner cutting edge have a positive cutting edge inclination angle, and is formed in a spiral shape which is twisted toward the rear side in the end-mill rotational direction along a partial doughnut-shaped convex curve which is formed by a rotational locus when a convex circular arc formed by the corner cutting edge as seen from a direction facing the rake face is rotated around the axis as it approaches the outer peripheral cutting edge from the end cutting edge. Thereby, it is possible to keep the cutting edge inclination angle of the corner cutting edge from changing substantially and to prevent chip discharge performance from changing locally. Particularly by setting the cutting edge including this corner cutting edge to have a constant cutting edge inclination angle in the portion in which the chip breaker is formed, chips generated in the portion can be reliably processed and stably discharged by the chip breaker as described above.

Additionally, when the corner cutting edge has a positive cutting edge inclination angle as above, it is desirable that the groove bottom face of the chip breaker be inclined toward the rear side in the end-mill rotational direction as it approaches the outer peripheral cutting edge from the end cutting edge in a portion along at least a portion of the corner cutting edge, and a slope toward the rear side in the end-mill rotational direction is formed in the shape of a twist face which gradually becomes large as it approaches the center of the convex circular arc formed by the corner cutting edge from the corner cutting edge. Thereby, it is possible to prevent the normal rake angle in the corner cutting edge from changing greatly as described above and the cutting resistance from increasing locally or the cutting edge strength from being impaired locally, and to promote stable cutting.

Particularly by setting the cutting edge including this corner cutting edge to have a constant normal rake angle in the portion in which the chip breaker is formed, chips generated in the portion can be stably and reliably processed, and a local change in cutting resistance or cutting edge strength can also be prevented. Thus, in the invention, the normal rake angle of this cutting edge is substantially determined by the groove bottom face of the chip breaker formed on the side of the side ridge portion of the rake face. Thus, it becomes possible to give such a normal rake angle to the cutting edge irrespective of the shape of the wall face which faces the end-mill rotational direction in the chip discharge flute or the gash which becomes the rake face.

In addition, the invention can also be applied to a so-called solid radius end mill in which a chip discharge flute or a gash is formed at a tip portion of an end mill body, a wall face which faces an end-mill rotational direction is used as a rake face, and a cutting edge and a chip breaker are directly formed in this rake face. However, the invention can also be applied to, for example, an indexable radius end mill which has a cutting insert and an end mill body, wherein the cutting insert has a flat plate-shaped insert body being formed with a rake face, the cutting edge, and the chip breaker, and the cutting insert can be detachably attached to an insert mounting seat formed at a tip portion of the end mill body.

### EFFECTS OF THE INVENTION

As described above, according to the invention, it becomes possible to reliably process chips generated at a corner cutting edge of a radius end mill irrespective of any part, and it becomes possible to promote smooth and stable cutting.

### BRIEF DESCRIPTION OF THE DRAWINGS

FIG. 1 is a plan view showing one embodiment of a radius end mill of the invention.
FIG. 2 is a side view of the radius end mill of the embodiment shown in FIG. 1.
FIG. 3 is a front view of the radius end mill of the embodiment shown in FIG. 1.
FIG. 4 is a perspective view showing a cutting insert of a first embodiment of the invention.
FIG. 5 is a plan view of the cutting insert of the embodiment shown in FIG. 4.
FIG. 6 is a side view of the cutting insert of the embodiment shown in FIG. 4.
FIG. 7 is a front view of the cutting insert of the embodiment shown in FIG. 4.

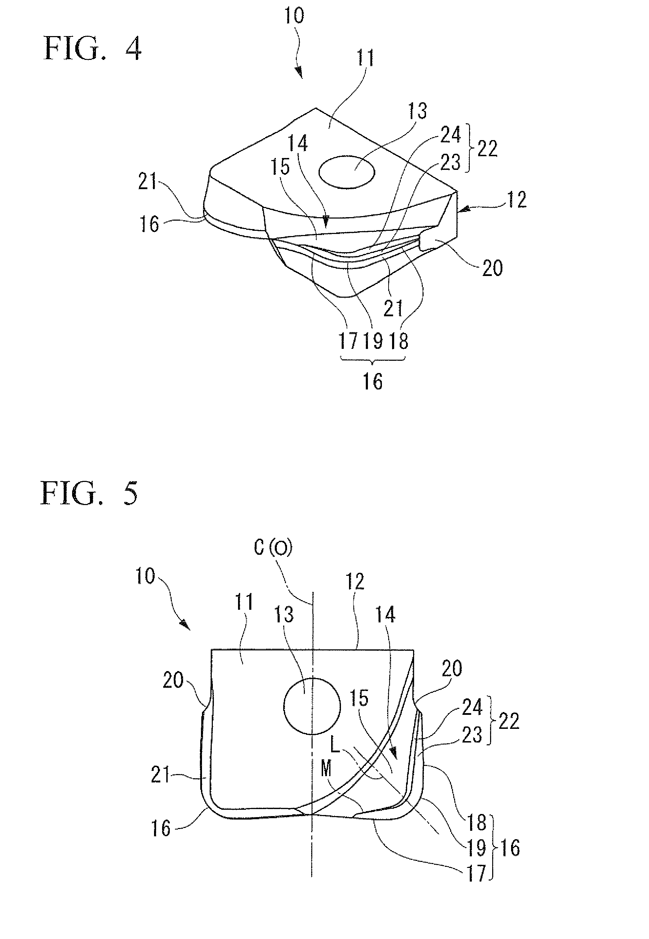

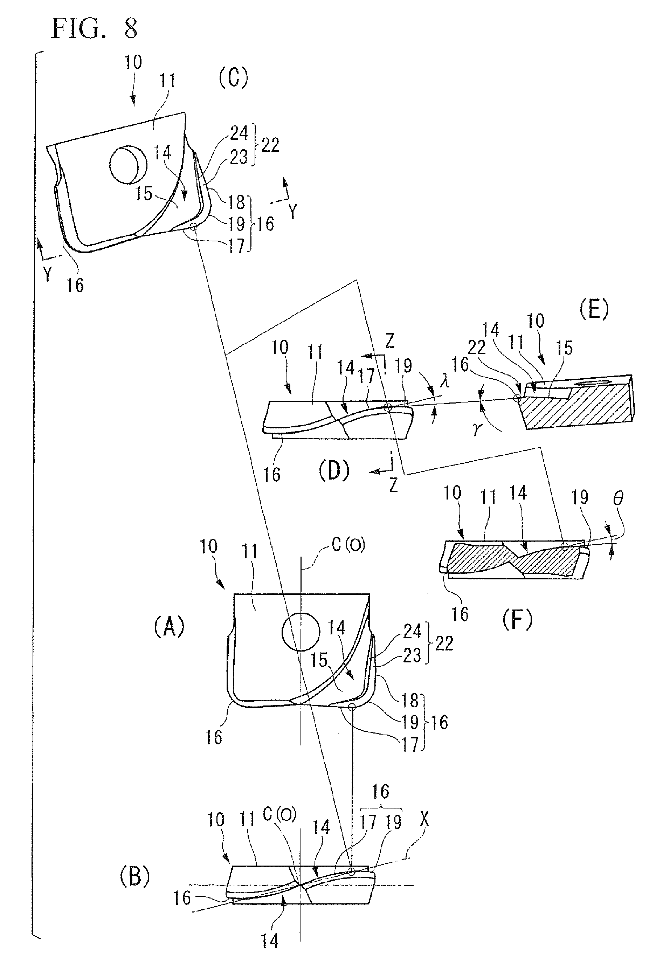

FIG. 8 is an explanatory view of the cutting insert of the embodiment shown in FIG. 4 attached to an end mill body. Specifically, FIG. 8(A) is a plan view, FIG. 8(B) is a front view, FIG. 8(C) is a view as seen from an end-mill rotational direction T perpendicular to a straight line X which connects an intersection point between an end cutting edge and a corner cutting edge, and a centerline C of an insert body in FIG. 8(B), FIG. 8(D) is a view seen from a direction perpendicular to a tangential line of a cutting edge in the intersection point of FIG. 8(C), FIG. 8(E) is a sectional view (ZZ sectional view in FIG. 8(D)) orthogonal to the cutting edge at the intersection point of FIG. 8(C), and FIG. 8(F) is a YY sectional view of the cutting insert of in FIG. 8(C).

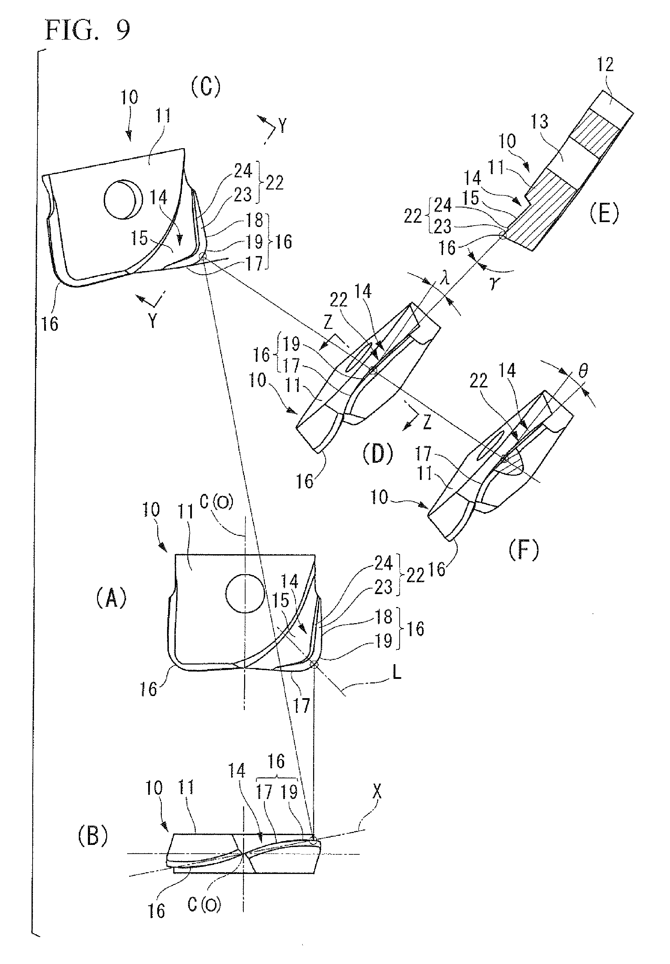

FIG. 9 is an explanatory view of the cutting insert of the embodiment shown in FIG. 4 is attached to an end mill body. Specifically, FIG. 9(A) is a plan view, FIG. 9(B) is a front view, FIG. 9(C) is a view as seen from an end-mill rotational direction T perpendicular to a straight line X which connects a point on a bisector L (a protruding end of a cutting edge) of the corner cutting edge and a centerline C of an insert body in FIG. 9(B), FIG. 9(D) is a view seen from a direction perpendicular to a tangential line of the cutting edge in the point (the protruding end of the corner cutting edge) of FIG. 9(C), FIG. 9(E) is a sectional view (ZZ sectional view in FIG. 9(D)) orthogonal to the cutting edge at the point of FIG. 9(C), and FIG 9(F) is a YY sectional view of the cutting insert of FIG. 9(C).

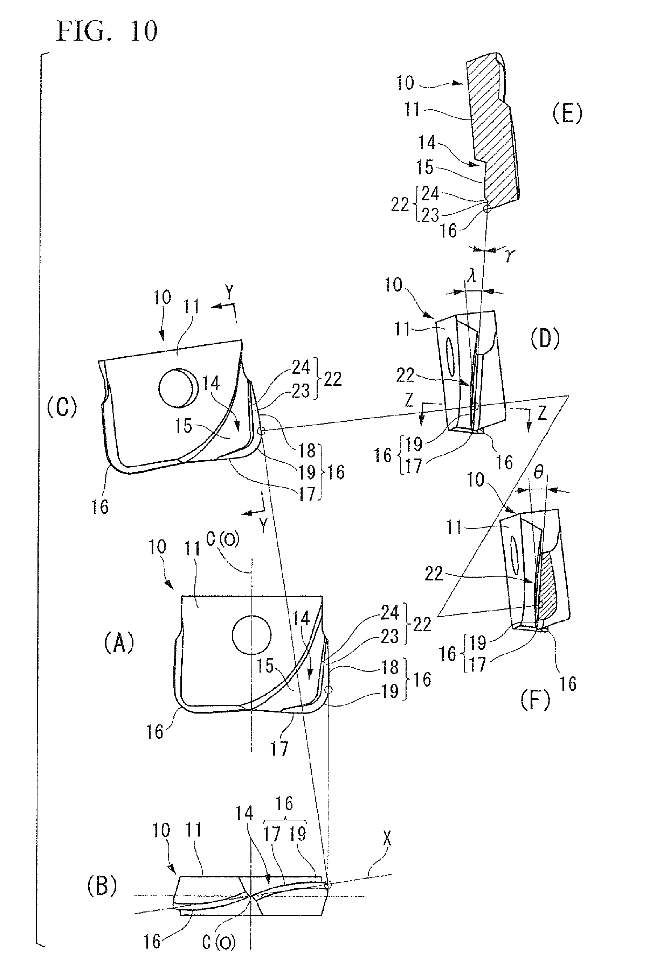

FIG. 10 is an explanatory view of the cutting insert of the embodiment shown in FIG. 4 is attached to an end mill body. Specifically, FIG. 10(A) is a plan view, FIG. 10(B) is a front view, FIG. 10(C) is a view as seen from an end-mill rotational direction T perpendicular to a straight line X which connects an intersection point between an outer peripheral cutting edge and a corner cutting edge, and a centerline C of an insert body in FIG. 10(B), FIG. 10(D) is a view seen from a direction perpendicular to a tangential line of a cutting edge in the intersection point of FIG. 10(C), FIG. 10(E) is a sectional view (ZZ sectional view in FIG. 10(D)) orthogonal to the cutting edge at the intersection point of FIG. 10(C), and FIG. 10(F) is a YY sectional view of the cutting insert of FIG. 10(C).

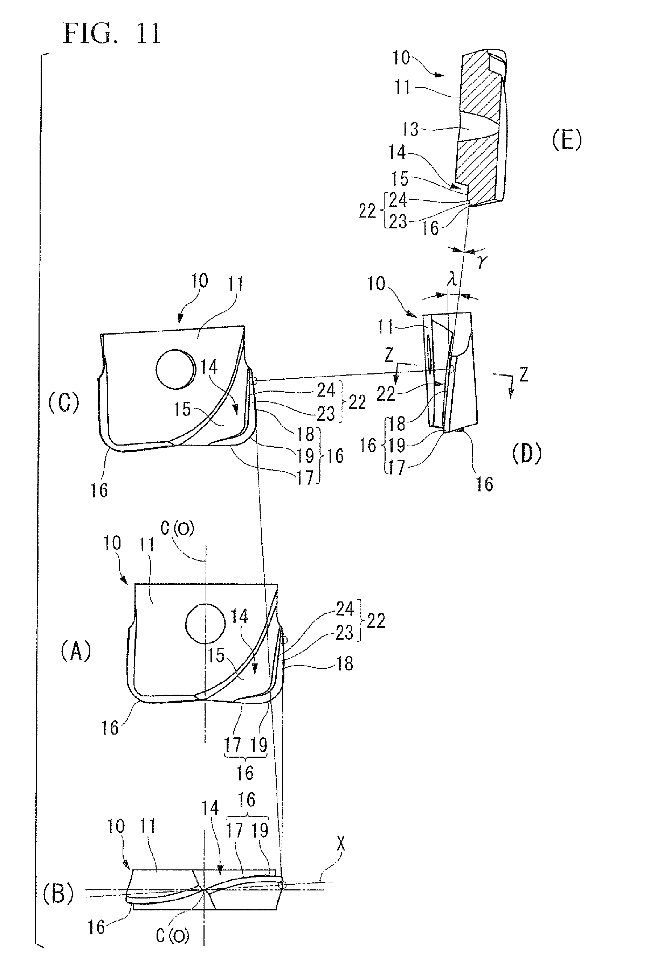

FIG. 11 is an explanatory view of the cutting insert of the embodiment shown in FIG. 4 which is attached to an end mill body. Specifically, FIG. 11(A) is a plan view, FIG. 11 (B) is a front view, FIG. 11 (C) is a view as seen from an end-mill rotational direction T perpendicular to a straight line X which connects a point on the rear end side of the outer peripheral cutting edge and a centerline C of an insert body in FIG. 11 (B), FIG. 11 (D) is a view seen from a direction perpendicular to a tangential line of a cutting edge in the point of FIG. 11(C), and FIG. 11(E) is a sectional view (ZZ sectional view of the cutting insert of FIG. 11(D)) orthogonal to the cutting edge at the point of FIG. 11(C).
FIG. 12 is a plan view showing a cutting insert of a second embodiment of the invention.
FIG. 13 is a side view of the cutting insert of the embodiment shown in FIG. 12.
FIG. 14 is a front view of the cutting insert of the embodiment shown in FIG. 12.
FIG. 15 is a plan view showing a cutting insert of a third embodiment of the invention.
FIG. 16 is a side view of the cutting insert of the embodiment shown in FIG. 15.
FIG. 17 is a front view of the cutting insert of the embodiment shown in FIG. 15.
FIG. 18 is a plan view showing a cutting insert of a fourth embodiment of the invention.
FIG. 19 is a side view of the cutting insert of the embodiment shown in FIG. 18.
FIG. 20 is a front view of the cutting insert of the embodiment shown in FIG. 18.

### EXPLANATION OF REFERENCES

1 End mill body
2 Insert mounting seat
5 Chip discharge flute
10,30,40,50 Cutting insert
11 Insert body
14 Gash
15 Rake face
16 Cutting edge
17 End cutting edge
18 Outer peripheral cutting edge
19 Corner cutting edge
22 Chip breaker
23 Groove bottom face of the chip breaker 22
24 Groove wall face of the chip breaker 22
O Axis of the end mill body 1
C Centerline of the Insert body 11
T End-mill rotational direction
L Bisector of Corner cutting edge 19
M Intersection ridgeline with the rake face 15 and the groove bottom face 23
λ Cutting edge inclination angle
γ Normal rake angle (Right rake angle)
θ Angle of inclination of the groove bottom face 23 in a sectional view of the insert body which crosses the chip breaker 22

### BEST MODE FOR CARRYING OUT THE INVENTION

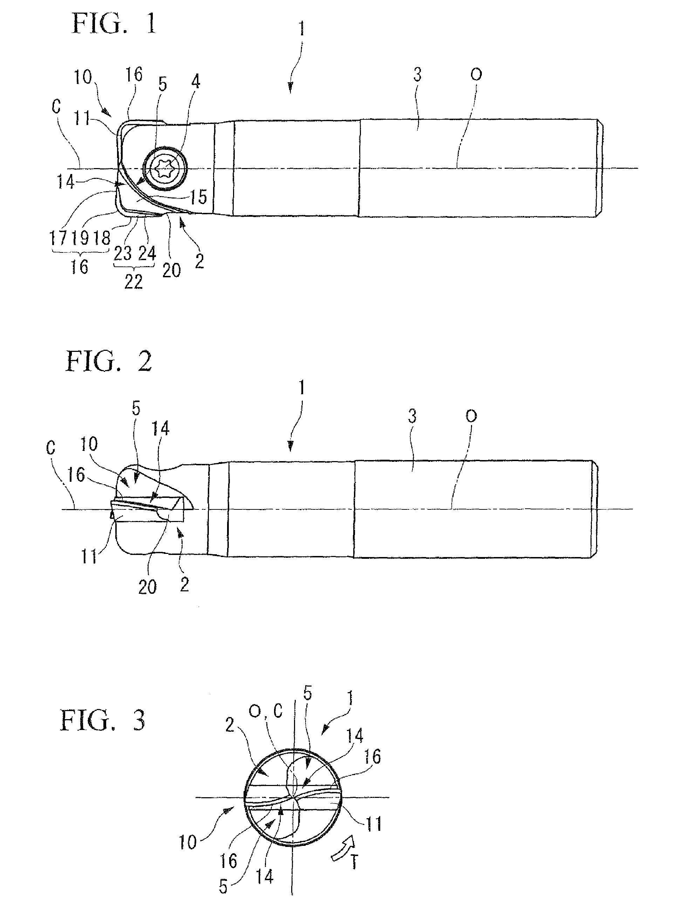

FIGS. 1 to 11 show one embodiment when the invention is applied to the above-described indexable radius end mill. That is, the radius end mill of this embodiment is configured such that a cutting insert 10 of a first embodiment of the invention as shown in FIGS. 4 to 7 to be detachably attached to an insert mounting seat 2 formed at a tip portion of a substantially columnar end mill body 1 having an axis O as its center as shown in FIGS. 1 to 3. In the radius end mill, a shank portion 3 on the side of a rear end of the end mill body 1 is attached to a spindle of a machine tool, and is fed in a direction in which the shank portion intersects the axis O while being rotated in an end-mill rotational direction around the axis O indicated by reference numeral T in FIG. 3, so that a work material can be cut by the cutting insert 10.

Here, the end mill body 1 is formed from steel or the like, and the insert mounting seat 2 is formed such that the tip portion of the end mill body 1 is cut away along a plane including an axis O by a recess which is angularly U-shaped in side view as shown in FIG. 2, and is opened to the tip side. The cutting insert 10 is inserted into the insert mounting seat 2 formed in this way, and then fixed and attached such that a clamp screw 4 inserted through orthogonal to the axis O perpendicularly to the plane from one jaw portion of the tip portion of the end mill body 1 split in the shape of a jaw by the insert mounting seat 2 is screwed into the other jaw portion of the tip portion of the end mill body 1 through the cutting insert 10 and thereby sandwiched between the pair of jaw portions.

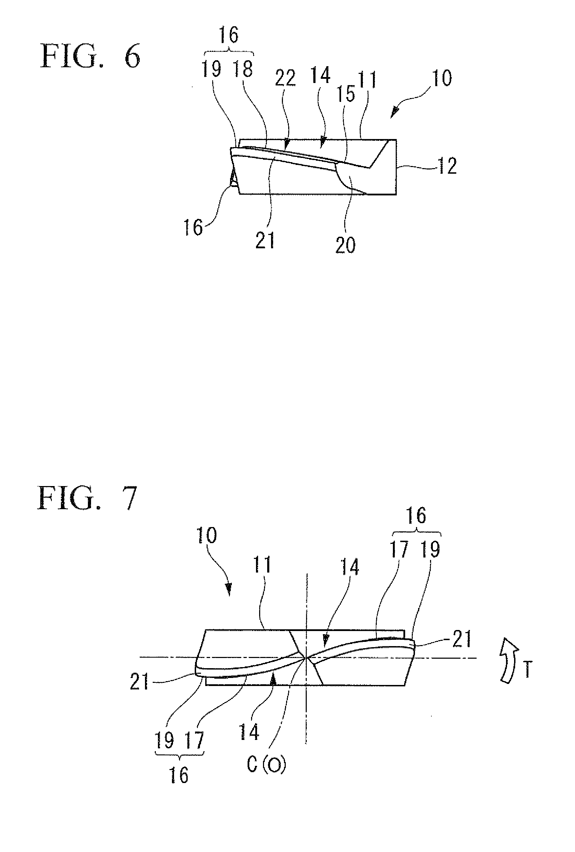

In the cutting insert 10 of this embodiment, the insert body 11 is formed in the shape of a substantially oblong flat plate as shown in FIGS. 4 to 7 from a hard material, such as cemented carbide, and the insert body 11 is formed in the symmetry of rotation of 180° with respect to a centerline C passing through the center thereof in its thickness direction (vertical direction in FIGS. 6 and 7), and is attached to the insert mounting seat 2 such that the centerline C becomes coaxial with the axis O.

Here, the thickness of the insert body 11 is set to a size such that the insert body can be fitted into the angularly U-shaped insert mounting seat 2, and a rear end face (upper side in FIG. 5, and a face which faces the right side in FIG. 6) 12 of the insert body 11 is formed as a flat face perpendicular to the centerline C. The insert body 11 is fitted into the insert mounting seat 2 in this way, and the rear end face 12 is brought into close contact with an bottom face which faces the tip side of the insert mounting seat 2, and is seated on the insert mounting seat 2. Additionally, an insertion hole 13 through which the clamp screw 4 is inserted is formed in a position closer to the rear end face 12 than the middle of the insert body in the direction of the centerline C in the insert body 11 so as to pass through the insert body 11 in the thickness direction perpendicular to the centerline C.

In a state (hereinafter simply referred to as an attached state) where the insert body has been attached to the insert mounting seat 2 as above, a gash 14 is formed on the side (the right side in FIG. 5) of each of a pair of oblong side faces of the insert body 11 which faces the end-mill rotational direction T so as to cut away a tip outer peripheral portion of the side face in the end mill body 1 in the thickness direction. In the outer periphery of the tip portion of the end mill body 1, a pocketlike chip discharge flute 5 is formed on each jaw portion of the pair of jaw portions, and the gash 14 is provided on a tip side of the chip discharge flute 5. In this embodiment, the wall face of the gash 14 which faces the end-mill rotational direction T is used as a rake face 15, and a cutting edge 16 is formed at a side ridge portion of the rake face 15.

The cutting edge 16, in the attached state, is composed of an end cutting edge 17 which is located at a side ridge portion on the tip side of the rake face 15 and extends toward a radial direction with respect to the axis O, an outer peripheral cutting edge 18 which is located at a side ridge portion on the outer peripheral side of the rake face 15 and extends in the direction of the axis O, and a corner cutting edge 19 which is located at a corner side ridge portion on the tip outer peripheral side formed by the end cutting edge 17 and the outer peripheral cutting edge 18 and is smoothly connected to both the end cutting edge 17 and the outer peripheral cutting edge 18. The corner cutting edge 19 is formed substantially in the shape of a 1/4 convex circular arc as seen from a direction facing the rake face 15. Here, the end cutting edge 17 is inclined so as to be slightly lower toward the rear end side in the direction of the axis O as it approaches the inner peripheral side in the radial direction of the end mill body 1 in the attached state, and is thereby adapted such that a concave angle is given to the end cutting edge 17.

Additionally, the width of the insert body 11 in the direction orthogonal to the centerline C as seen from a direction facing the rake face 15 is made slightly small by one step via a stepped portion 20 on the side of the rear end face 12, and the outer peripheral cutting edge 18 extends so as to reach the stepped portion 20. Moreover, the wall face of the gash 14 which rises from the rake face 15 is convexly curved toward the cutting edge 16 from the vicinity of an intersection point between the end cutting edge 17 and the centerline C toward a portion between the stepped portion 20 and the rear end face 12 as seen from the direction facing the rake face 15 as shown in FIG. 5 in this embodiment, and is formed in the shape of an inclined curve which is lower as it rises from the rake face 15 in the thickness direction.

In addition, the portions excluding the gashes 14 are formed as flat faces perpendicular to the rear end face 12 in the pair of oblong side faces of the insert body 11, the thickness of the insert body 11 is set to a thickness between the flat faces, and the insertion hole 13 is also opened to the flat face portions. Additionally, the portion excluding the rear end face 12 and the portion in which the stepped portion 20 is formed from the rear end face 12 among four peripheral faces arranged between the pair of side faces is formed as a flank face 21 connected to the cutting edge 16 on the side of each side face, and the angle of relief is given so as to be gradually lower as it separates in the thickness direction from the cutting edge 16.

Meanwhile, the rake face 15 of the gash 14, as shown in FIG. 5, ridges highest in substantially the height direction on a bisector L of the corner cutting edge 19 which is formed in the shape of a 1/4 convex circular arc as described above as seen from the direction facing the rake face 15, that is, on a straight line (a straight line intersects the centerline C at 45°) which connects the center of the 1/4 convex circular arc and a protruding end of the corner cutting edge 19, and is formed in the shape of a convex curve which is lower in the thickness direction while being convexly curved as it separates from the bisector L (refer to FIG. 4). Additionally, the rake face 15 is formed so as to be gradually lower in the thickness direction as it separates from the cutting edge 16 in the direction of the bisector L.

A chip breaker 22 is formed at least along the corner cutting edge 19 on the side of the side ridge portion in which the cutting edge 16 of the rake face 15 is formed. Particularly in this embodiment, the chip breaker 22, as shown in FIG. 5, reaches the corner cutting edge 19 from the middle of the end cutting edge 17 and further extends to the outer peripheral cutting edge 18, and is continuously formed along the cutting edge 16 over the total length of the outer peripheral cutting edge 18. Additionally, the chip breaker 22 is composed of a groove bottom face 23 which is recessed so as to is lower than the rake face 15 and is connected to the cutting edge 16, and a groove wall face 24 which rises from the groove bottom face 23 on the side of the groove bottom face 23 opposite the cutting edge 16 and is connected to the rake face 15. Accordingly, the cutting edge 16, as shown in FIGS. 4 and 5, is formed at an intersection ridgeline portion between the groove bottom face 23 and the flank face 21 in the portion in which the chip breaker 22 is formed.

In addition, the end cutting edge 17 is formed at an intersection ridgeline portion between the rake face 15 of the gash 14 and the flank face 21 on the inner peripheral side of the end cutting edge 17 where such a chip breaker 22 is not formed in the attached state. In this embodiment, an inner peripheral end of the end cutting edge is located on the axis O, that is, the cutting edges 16 which are respectively formed at the pair of side faces of the insert body 11 are adapted such that the end cutting edges 17 thereof are made to intersect each other on the centerline C (refer to FIGS. 5 and 7). Additionally, in this embodiment, the groove wall face 24 is formed in the shape of an inclined face which is lower as it rises toward the rake face 15 (refer to FIGS. 4 to 6).

Moreover, the chip breaker 22 is formed so as to extend parallel to the corner cutting edge 19 in a portion along the corner cutting edge 19, that is, is formed so as to have a 1/4 convex circular-arc shape which is concentrically formed with a 1/4 convex circular arc formed by the corner cutting edge 19 as seen from the direction facing the rake face 15, particularly, such that the groove bottom face 23 has a substantially constant width along the corner cutting edge 19.

Meanwhile, the chip breaker 22 is formed such that the groove width thereof becomes small at one or both ends of portions of the chip breaker 22 along the end cutting edge 17 and the outer peripheral cutting edge 18 from both ends of a portion of the chip breaker 22 along the corner cutting edge 19. In this embodiment, at both ends on the side of the end cutting edge 17 and the outer peripheral cutting edge 18, the chip breaker is adapted such that the groove width thereof gradually becomes smaller as it separates from the corner cutting edge 19, particularly, such that the width of the groove bottom face 23 gradually becomes smaller.

Moreover, at both ends of the chip breaker 22 formed in this way, the chip breaker 22 is formed such that the groove bottom face 23 rises so as to connect with the rake face 15 in a direction along the end cutting edge 17 or the outer peripheral cutting edge 18 at each end, or is formed such that the groove bottom face 23 extends so as to be parallel to the rake face 15, and the chip breaker 22 is opened at the end. Here, the chip breaker 22 in this embodiment rises at the end on the side of the end cutting edge 17 such that the groove bottom face 23 connects with the rake face 15, and is formed at the end on the side of the outer peripheral cutting edge 18 such that the groove bottom face 23 extends parallel to the rake face 15 and the chip breaker 22 is opened.

That is, the chip breaker 22 is adapted at the end on the side of the end cutting edge 17 such that the groove bottom face 23 forms a shallow ridge gradually toward the rake face 15 and is cutting-finished as the end cutting edge 17 relatively approaches the inner peripheral side of the end mill body 1 in the attached state, and on the contrary, the groove wall face 24 gradually becomes smaller and does not reach an inner peripheral end of the chip breaker 22, and on the inner peripheral side of the inner peripheral end, the groove bottom face 23 intersects and is continuous with the rake face 15, for example, at an obtuse angle of about 178°, and the width of the groove bottom face 23 gradually becomes smaller as it approaches the inner peripheral side apart from the corner cutting edge 19 as described above such that an intersection ridgeline M (refer to FIG. 5) intersects the inner peripheral side of the end cutting edge 17. Here, the groove bottom face 23 in the insert body 11 is formed in the shape of a convex curve which is lower in the thickness direction while being convexly curved as it approaches the end cutting edge 17 and the outer peripheral cutting edge 18 apart from the bisector L in the corner cutting edge 19 like the rake face 15 (refer to FIG. 4 and 5).

On the other hand, as shown in FIGS. 4 to 6, at the end on the side of the outer peripheral cutting edge 18, the chip breaker 22 is adapted such that the width of the groove bottom face 23 becomes smaller and the groove width of the chip breaker 22 become smaller as the outer peripheral cutting edge 18 approaches the rear end side of the end mill body 1 in the attached state, but the groove wall face 24 extends with a substantially constant size. Accordingly, the groove bottom face 23 and the rake face 15 extend parallel to each other at a substantially constant distance in the thickness direction. At the rear end of the outer peripheral cutting edge 18, the chip breaker 22 is formed such that the groove bottom face 23 and the groove wall face 24 extend so as to intersect the stepped portion 20 while the groove wall face 24 as well as the groove bottom face 23 is left as it is, and at the end on the side of the outer peripheral cutting edge 18, the chip breaker 22 is opened to the stepped portion 20.

By forming the chip breaker 22 in this way, the cutting edge 16 formed at the intersection ridgeline portion between the groove bottom face 23 of the chip breaker 22, and the flank face 21 is formed in the shape of a convex curve which is lower in the thickness direction of the insert body 11 while being convexly curved as the groove bottom face 23 separates from the bisector L as described above. Therefore, as shown in FIG. 7, the cutting edge is similarly formed substantially in the shape of a convex curve which is lower in the thickness direction as it separates from the protruding end of the corner cutting edge 19.

Also, in the radius end mill of this embodiment in which such cutting insert 10 is attached to the end mill body 1, as shown in FIGS. 8(D), 9(D), and 10(D) of FIG. 8 to FIG. 10, a positive cutting edge inclination angle λ of the cutting edge 16 is given at least to the corner cutting edge 19. Moreover, the corner cutting edge 19 is formed so as to have a spiral shape which is twisted toward the rear side in the end-mill rotational direction T as it approaches the outer peripheral cutting edge 18 from the end cutting edge 17 in such an attached state. Here, the spiral formed by the corner cutting edge 19 becomes an annular spiral like a thread is obliquely wound along a partial doughnut-shaped or torus-shaped convex curve which is formed by a rotational locus when a convex circular arc formed by the corner cutting edge 19 as seen from the direction facing the rake face 15 is rotated around the axis O in the attached state.

Moreover, in this embodiment, as shown in FIG. 11 (D), even in the outer peripheral cutting edge 18 or the end cutting edge 17, the cutting edge 16 in the attached state in a portion which the chip breaker 22 is formed has a positive cutting edge inclination angle λ. Furthermore, the cutting edge inclination angle λ is set to a constant magnitude of, for example, 10°, including the corner cutting edge 19. In addition, by giving the constant cutting edge inclination angle λ fixed in this way, the outer peripheral cutting edge 18 is formed in a spiral shape which is twisted at a constant helix angle equal to the cutting edge inclination angle λ with respect to the axis O along a cylindrical face having the axis O as its center in the attached state.

Meanwhile, in this embodiment, the cutting edge 16 is spirally twisted and formed such that the portion in which the chip breaker 22 is formed in this way has the positive cutting edge inclination angle λ. Accordingly, the groove bottom face 23 of the chip breaker 22 is also inclined toward the rear side in the end-mill rotational direction T as it approaches the outer peripheral cutting edge 18 from the end cutting edge 17 in a portion along at least a portion of the corner cutting edge 19, and a slope toward the rear side in the end-mill rotational direction T is formed as a twist face which gradually becomes larger as it approaches the center of a convex circular arc formed by the corner cutting edge 19 from the corner cutting edge 19. Particularly in this embodiment, the groove bottom face 23 is used as such a twist face over the total length of the corner cutting edge 19. Accordingly, in the cutting insert 10 of this embodiment, the groove bottom face 23 is inclined in a direction which is lower in the thickness direction as it approaches the outer peripheral cutting edge 18 from the end cutting edge 17 in a portion along at least a portion of the corner cutting edge 19, and a slope in a direction which is lower in the thickness direction is formed as a twist face which becomes gradually large as it approaches the center of a convex circular arc formed by the corner cutting edge 19 from the corner cutting edge 19.

For example, FIGS. 8(F), 9(F), and 10(F) of FIGS. 8 to 10 are sectional views of the insert body 11 which transverses the chip breaker 22 in a position on the side of the center of the convex circular arc by a certain distance from the corner cutting edge 19. The angle of inclination of the groove bottom face 23 in these cross-sections is represented by reference numeral θ in these drawings. As shown in these drawings, the angle of inclination θ is set to around 12° and is larger than the cutting edge inclination angle λ shown in FIGS. 8(D), 9(D), and 10(D). Additionally, in this embodiment, the portion of the groove bottom face 23 of the chip breaker 22 on the side of the outer peripheral cutting edge 18 is formed as the same twist face as a normal helix end mill, and the helix angle is equal to the cutting edge inclination angle λ, and the normal rake angle γ is made equal to that of the corner cutting edge 19. Additionally, the portion of the groove bottom face 23 on the side of the end cutting edge 17 is formed as a convex curve, and the radial rake angle thereof is equal to the cutting edge inclination angle λ in a connecting portion with the corner cutting edge 19, and the normal rake angle γ is made equal to that of the corner cutting edge 19. Thus, as shown in FIGS. 8(E), 9(E), 10(E), and 11(E) of FIGS. 8 to 11 in the attached state, a constant normal rake angle γ of, for example, 0°, is given to the cutting edge 16 in the portion in which the chip breaker 22 is formed.

In the radius end mill of the above configuration in which such cutting insert 10 to be detachably attached to the insert mounting seat 2 of the tip portion of the end mill body 1, first, the chip breaker 22 is formed at the side ridge portion of the rake face 15 at least along the corner cutting edge 19, and the chip breaker 22 is formed in the shape of a convex circular arc which extends parallel to the corner cutting edge 19 at the portion along the corner cutting edge 19. Thus, with the distance between the groove wall face 24 of the chip breaker 22 and the corner cutting edge 19 being set to an approximately constant distance in a direction along a convex circular arc formed by the corner cutting edge 19, the groove wall face 24 can be arranged so as to necessarily exist immediately on the side of the center of the convex circular arc of the corner cutting edge 19.

For this reason, chips generated on the side of the end cutting edge 17 or on the contrary the outer peripheral cutting edge 18 of the coner cutting edge 19 as well as chips generated at the periphery of the protruding end of the corner cutting edge 19 on the bisector L can be made to collide with the groove wall face 24 reliably and rapidly, and thereby, the chips can be divided and processed smoothly by giving resistance to the chips and curling the chips in an outflow direction. In addition, the chip breaker 22 may not have a 1/4 convex circular arc which is concentrically formed with a 1/4 convex circular arc formed by the corner cutting edge 19, and thus, the groove bottom face 23 may not have a constant width. For example, the width of the groove bottom face 23 may increase or decrease in some measure along the corner cutting edge 19 such that the width is slightly narrower on the side of the protruding end (on the side of the bisector L) of the corner cutting edge 19 than on the side of the end cutting edge 17 or on the side of the outer peripheral cutting edge 18 at both ends. That is, as described above, with respect to the corner cutting edge 19, the groove wall face 24 may be arranged so as to be on the side of the center of the convex circular arc of the corner cutting edge 19.

Moreover, the chip breaker 22 rises at the end on the side of the end cutting edge 17 such that the groove bottom face 23 is continuous with the rake face 15 of the gash 14 in a direction along the end cutting edge 17, and is formed at the end on the side of the outer peripheral cutting edge 18 such that the groove bottom face 23 extends parallel to the rake face 15 in a direction along the outer peripheral cutting edge 18 and the chip breaker 22 is opened at the stepped portion 20. Accordingly, even at either ends, smooth chip processing can be promoted on the chips generated over the corner cutting edge 19 or the chips generated beyond the corner cutting edge 19.

That is, the groove bottom face 23 of the chip breaker 22 rises and connects with the rake face 15 in this way at the end of the corner cutting edge 19 on the side of the end cutting edge 17. Therefore, a level difference is not caused between the groove bottom face 23 and the rake face 15, or between the cutting edge 16 of the portion connected to the groove bottom face 23, and the cutting edge 16 of the portion connected to the rake face 15. Particularly in this embodiment, the groove bottom face 23 and the rake face 15 intersect at an obtuse angle near to a straight angle of about 178° at the intersection ridgeline M. Thus, there is no case that machining accuracy deteriorates due to such a level difference, or any damage, such as fracture or chipping, is caused at the cutting edge in the level difference, and the life of tools is lowered. Additionally, for example, even if chips are generated and flow so as to straddle the intersection ridgeline M, there is no case that the chips are divided along the outflow direction. Accordingly, there is also no case that the chips which are divided in the outflow direction in this way are entangled together. The chips can also be smoothly processed by making the chips collide with the groove wall face 24 of the chip breaker 22 or the wall face of the gashes 14, thereby curling the chips in the outflow direction, and dividing the chips along a width direction of the chips intersecting this outflow direction.

Additionally, at the end of the chip breaker 22 on the side of the outer peripheral cutting edge 18 which the rake face 15 and the groove bottom face 23 extend parallel to each other in the direction along the cutting edge 16, and the chip breaker 22 is open to the stepped portion 20. There is also no case that a level difference is caused in the cutting edge 16, and the groove wall face 24 which serves a step between the rake face 15 and the groove bottom face 23 is arranged so as to face the outflow direction of the chips. Thus, there is also no case that chips to be generated are divided in the outflow direction, and the chips are finely divided in a direction which intersects the outflow direction, and are processed smoothly by making the chips collide with the groove wall face 24, thereby curling the chips.

Accordingly, according to the radius end mill of the above configuration, machining accuracy can be improved and the life of tools can be extended. Additionally, as well as chips generated by at least the corner cutting edge 19 formed by the chip breaker 22, chips generated by the cutting edge 16 on the side of any of the end cutting edge 17 and the outer peripheral cutting edge 18 can also be processed reliably and smoothly in the portion in which the chip breaker 22 is formed, and efficient cutting can be promoted.

Moreover, in this embodiment, the chip breaker 22 is adapted such that the groove width thereof gradually becomes smaller as it separates from the corner cutting edge 19 in a direction along the cutting edge 16 at both ends on the side of the end cutting edge 17 and the outer peripheral cutting edge 18. Thus, the distance between the cutting edge 16 and the groove wall face 24 of the chip breaker 22 can be made smaller at both of these ends. Accordingly, on the side of the end cutting edge 17 of the corner cutting edge 19, even when the thickness of chips becomes thin in slot milling and the chips stretch easily, it becomes possible to make chips collide with the groove wall face 24 in a position closer to the cutting edge 16. Thereby it becomes possible to curl the chips as small ones. Even when the chips are thin, the chips can be divided and processed smoothly. Additionally, even when the radial depth of cut is small in side milling or the thickness of chips becomes thin and the chips stretch easily even on the side of the outer peripheral cutting edge 18 of the corner cutting edge 19, it becomes possible to achieve the same smooth processing as in the above case.

Moreover, in this embodiment, the chip breaker 22 extends to the outer peripheral cutting edge 18, and particularly, the end on the side of the outer peripheral cutting edge 18 reaches a termination end (rear end of the direction of axis O) of the outer peripheral cutting edge 18 in the stepped portion 20, that is, the chip breaker 22 is formed over the total length of the outer peripheral cutting edge 18. For this reason, when the portion of the corner cutting edge 19 from the outer peripheral cutting edge 18 to the outer peripheral cutting edge 18 is used, or even when cutting is performed only by the outer peripheral cutting edge 18 without using the end cutting edge 17 or the corner cutting edge 19 according to, for example, the shape of a work material or the like, favorable chip processability can be obtained.

Meanwhile, in the radius end mill of this embodiment, at least the corner cutting edge 19 has the positive cutting edge inclination angle λ, and is formed in a spiral shape which is twisted toward the rear side in the end-mill rotational direction T as it approaches the outer peripheral cutting edge 18 from the end cutting edge 17, and particularly is formed in the shape of an annular spiral which is twisted along a partial doughnut-shaped or torus-shaped convex curve which is formed by a rotational locus when a convex circular arc formed by the corner cutting edge 19 as seen from the direction facing the rake face 15 is rotated around the axis O. For this reason, particularly when the corner cutting edge 19 is used, it is possible to disperse cutting resistance and promote efficient cutting. Additionally, chips generated by the corner cutting edge 19 and processed as described above can be extruded and discharged toward the rear end side in the direction of the axis O, and chip discharge performance can be improved.

Moreover, in this embodiment, the cutting edge inclination angle λ in the portion in which the chip breaker 22 of the cutting edge 16 is formed, including the corner cutting edge 19, is made constant, and is set to a positive angle as it approaches the rear side in the end-mill rotational direction T from the end cutting edge 17 toward the outer peripheral cutting edge 18. Accordingly, in the cutting edge 16 in the portion in which the chip breaker 22 is formed, even if any part is used for cutting, it is possible to obtain the efficient cutting and an improvement in chip discharge performance as described above. Additionally, even when a spot used for cutting on the cutting edge 16 varies continuously, it becomes possible to promote stable cutting.

Additionally, in the radius end mill of this embodiment, the groove bottom face 23 of the chip breaker 22 is inclined toward the rear side in the end-mill rotational direction T as it approaches the outer peripheral cutting edge 18 from the end cutting edge 17 in a portion along at least a portion of the corner cutting edge 19, and a slope toward the rear side in the end-mill rotational direction T is formed as a twist face which becomes gradually large as it approaches the center of a convex circular arc formed by the corner cutting edge 19 from the corner cutting edge 19. For this reason, even if the corner cutting edge 19 is formed in a spiral shape having the positive cutting edge inclination angle λ as described above, the normal rake angle γ in a cross-section orthogonal to the corner cutting edge 19 in each part of the corner cutting edge 19 can be prevented from changing greatly. It becomes possible to avoid the sharpness of the corner cutting edge 19 becomes blunt locally, and cutting resistance increases or a spot where cutting edge strength is impaired, and fracture or chipping tends to occur is created.

Particularly, in this embodiment, the normal rake angle γ of the cutting edge 16 is made constant in the portion in which the chip breaker 22 is formed, including the corner cutting edge 19. Accordingly, even if any spot of the cutting edge 16 of this portion is used for cutting, almost uniform sharpness and cutting edge strength can be secured, and in this portion, the cutting edge inclination angle λ can be made constant as described above. Thus, more stable cutting can be performed. In addition, particularly in order to positively uniformize the cutting edge strength of the cutting edge 16 in the portion in which the chip breaker 22 is formed, it is desirable that the flank face 21 connected to the cutting edge 16 in this portion be formed in the shape of a twist face which is twisted as it approaches the outer peripheral cutting edge 18 from the end cutting edge 17 such that the wedge angle in a cross-section orthogonal to the cutting edge 16 becomes constant.

Also, in the radius end mill of the above configuration, at least the corner cutting edge 19 is formed at the intersection ridgeline portion between the groove bottom face 23 of the chip breaker 22 formed at the side ridge portion of the rake face 15 and the flank face 21. Thus, it becomes possible to relatively easily form the corner cutting edge 19 which has a spiral shape at the positive cutting edge inclination angle λ as described above, or the groove bottom face 23 in the shape of a twist face, irrespective of the shape of the rake face 15. Additionally, it also becomes easy to make constant the cutting edge inclination angle λ or normal rake angle γ of the cutting edge 16 in the portion in which the chip breaker 22 is formed.

Here, in the radius end mill according to the first aspect of the invention, the chip breaker which has a groove bottom face which is lower from the rake face and a groove wall face which rises from the groove bottom face and connects with the rake face at least along the corner cutting edge, on the side of the side ridge portion of the rake face, is formed so as to have a convex circular-arc shape extending parallel to the corner cutting edge in the portion along the corner cutting edge. Thus, at both ends of the chip breaker on the side of the end cutting edge and on the side of the outer peripheral cutting edge, the groove bottom face rises so as to connect with the rake face in a direction along the end cutting edge or outer peripheral cutting edge at this end, or the chip breaker may be opened such that the groove bottom face is parallel to the rake face. It is not indispensable to make the cutting edge inclination angle λ constant with the cutting edge being formed in a spiral shape at least in the portion along the corner cutting edge or to make the normal rake angle γ constant with the groove bottom face being formed in the shape of a twist face in a portion along at least a portion of the corner cutting edge.

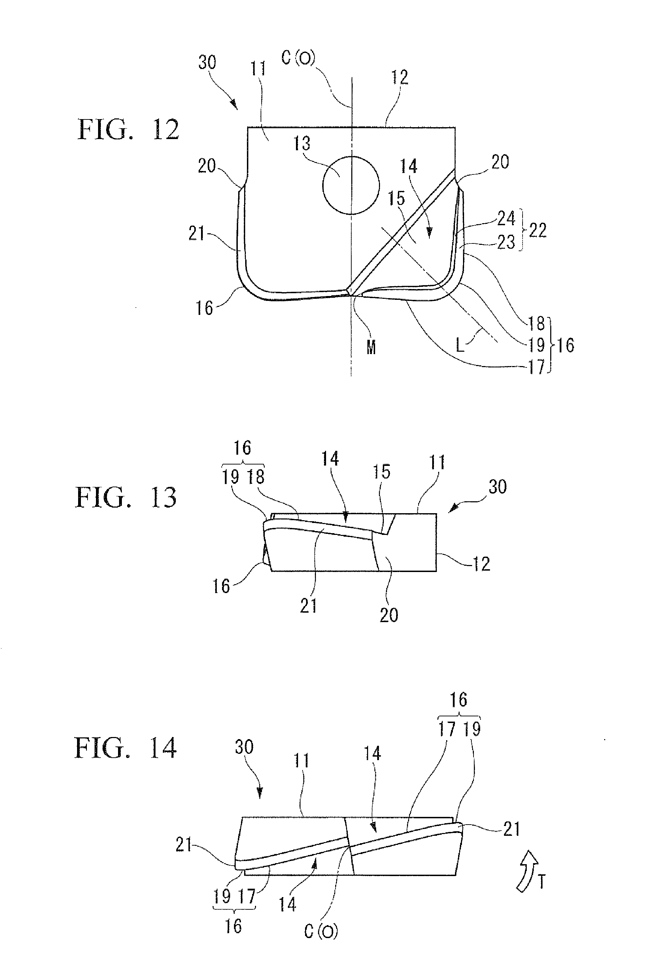

For example, FIGS. 12 to 14 show a cutting insert 30 of a second embodiment of the invention in which the cutting edge inclination angle λ or the normal rake angle γ of the cutting edge 16 is not constant, and the rake face 15 which faces the end-mill rotational direction T of the gash 14 is formed in the shape of a plane which is lower toward the rear side in the end-mill rotational direction T as it separates from the cutting edge 16 substantially in the direction along the bisector L. Even in third and fourth embodiments, which will be described later, including this second embodiment, the same reference numerals are given to the elements common to those of the first embodiment shown in FIGS. 4 to 11. However, even if the rake face 15 is planar in this way, deterioration of machining accuracy, or lowering of the life of tools can be prevented, and chips can be processed reliably and smoothly by forming the chip breaker 22.

In addition, in this second embodiment, the rake face 15 of the gash 14 is formed in such a planar shape. Thus, the wall face of the gash 14 which rises from the rake face 15 is formed so as to extend in the shape of a straight line in plan view which faces the rake face 15. Additionally, in this second embodiment, the end cutting edge 17 is formed so as to extend in the shape of a straight line in conformity with such a rake face 15 even in a portion in which the chip breaker 22 is formed.

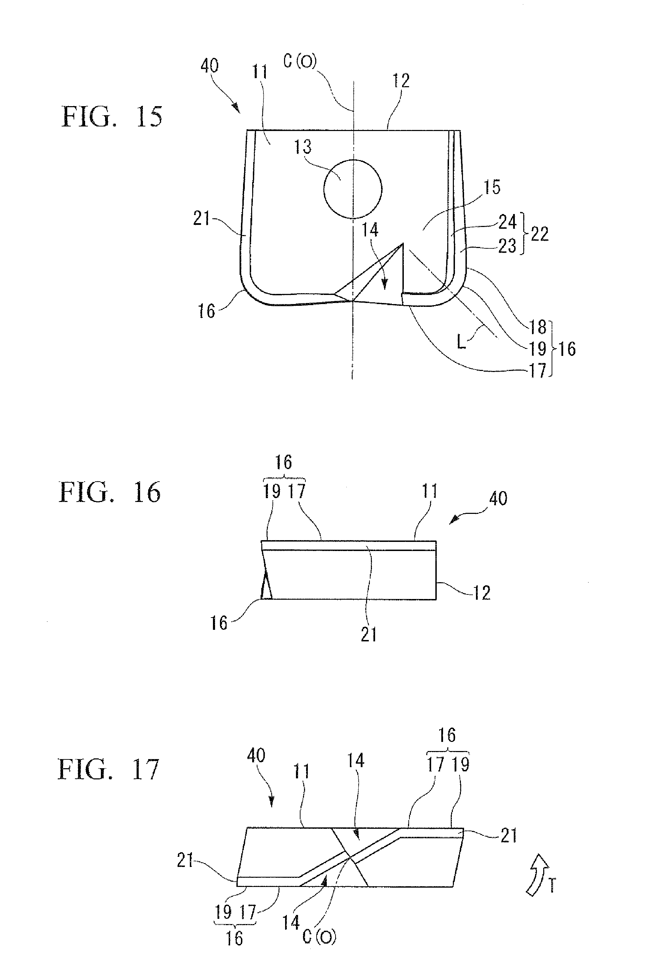

Additionally, like the cutting insert 40 of the third embodiment of the invention shown in FIGS. 15 to 17, even in an end mill in which an insert adapted such that the corner cutting edge 19 and the outer peripheral cutting edge 18 and the portion of the corner cutting edge 19 connected to the end cutting edge 17 in the cutting edge 16 are located on a single plane perpendicular to the thickness direction of the insert body 11 is attached to the tip portion of the end mill body 1, the chip breaker 22 formed along at least the corner cutting edge 19 may be formed along at least the shape of a convex circular arc parallel to the corner cutting edge 19, and may be formed such that the ends on the side of the end cutting edge 17 and the outer peripheral cutting edge 18 rises so as to connect with the rake face 15, or the groove bottom face 23 extends parallel to the rake face 15 and the chip breaker 22 is opened.

In addition, in this third embodiment or the fourth embodiment which will be described later, the gash 14 is formed only at an inner peripheral portion of the tip on the side which faces the end-mill rotational direction T in the attached state of both side faces which faces the thickness direction of the insert body 11, the remaining portion of this side face is arranged on the plane in which the cutting edge 16 is located except for the chip breaker 22, and this portion is used as the rake face 15. Additionally, in these third and fourth embodiments, the stepped portion 20 is not formed on the side of the rear end face 12 of the insert body 11, and in the third embodiment, the end of the chip breaker 22 on the side of the outer peripheral cutting edge 18 is opened to the rear end face 12 while the groove bottom face 23 thereof is parallel to the rake face 15, and the end of the chip breaker 22, on the side of the end cutting edge 17 is also opened to the gash 14 while the groove bottom face 23 is parallel to the rake face 15. Moreover, in this third embodiment, at the end on the side of the end cutting edge 17, the groove width of the chip breaker 22 does not become small, but is made approximately equal to that of the portion along the corner cutting edge 19.

As such, in the invention, as for the chip breaker 22, at both ends on the side on the side of the end cutting edge 17 and the outer peripheral cutting edge 18, the groove bottom face 23 and the rake face 15 may be parallel to each other and the chip breaker 22 may be opened, and contrary to this, the groove bottom face 23 may be cutting-finished and be continuous with the rake face 15 on both sides of both ends. Moreover, contrary to the first embodiment described above, at the end of the chip breaker 22 on the side of the outer peripheral cutting edge 18, the groove bottom face 23 may rise and may connect with the rake face 15, and at the end of the chip breaker 22 on the side of the end cutting edge 17, the groove bottom face 23 and the rake face 15 may be parallel to each other, and the chip breaker 15 may be opened like the third embodiment.

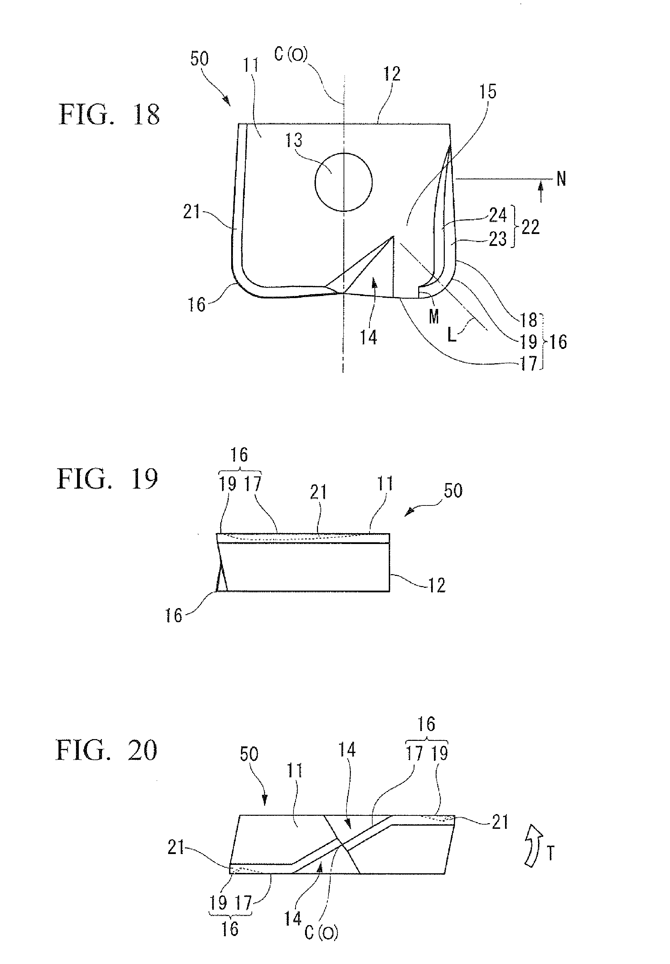

Furthermore, particularly, at the end of the chip breaker 22 on the side of the outer peripheral cutting edge 18, the chip breaker may be opened at the end in the range of the effective cutting edge length of the outer peripheral cutting edge 18 even when the chip breaker 22 is opened. For example, like a cutting insert 50 of the fourth embodiment of the invention shown in FIGS. 18 to 20, on the rear end side in the attached state with respect to the effective cutting edge length N of the outer peripheral cutting edge 18, the groove bottom face 23 may not be continuous with the rake face 15, and the chip breaker 22 may be cutting-finished so as to become a termination end. In addition, in this fourth embodiment, the chip breaker 22 is not formed along the end cutting edge 17, and at the end of the corner cutting edge 19 on the side of the end cutting edge 17, the groove bottom face 23 is continuous with the rake face 15 via the intersection ridgeline M at a distance from the gash 14.

Additionally, in the above description, the case where the invention is applied to the indexable radius end mill on which the cutting inserts 10, 30, 40, and 50 of the first to fourth embodiments are mounted on the end mill body 1 according to the embodiments shown in FIGS. 1 to 3 has been described. However, it is natural that the invention can be applied to a so-called solid radius end mill in which a chip discharge flute or the gash 14 is formed at the tip portion of the end mill body 1, the wall face which faces the end-mill rotational direction T is used as the rake face 15, and the cutting edge 16 and the chip breaker 22, as described above, are directly formed on this rake face 15. Moreover, the invention can also be applied to a so-called brazed radius end mill in which the cutting inserts 10, 30, 40, and 50, as described above, are anchored to and integrated with the end mill body 1 by brazing or the like. Additionally, a chip discharge flute may be formed by notching the end mill body 1 so as to extend diagonally from the center of the tip portion of the end mill body 1 to the outer peripheral side of the end mill body 1 along the gash 14 as shown in Fig 1 to 3. Moreover, a chip discharge flute may be formed on the outer peripheral of the end mill body 1 so as to extend in the direction of the axis of the end mill body 1, and in this case, the chip discharge flute may be spirally twisted in the same way as in the Patent Document 1.
While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### INDUSTRIAL APPLICABILITY

As for the invention, it becomes possible to reliably process chips generated at a corner cutting edge of a radius end mill irrespective of any part, and it becomes possible to promote smooth and stable cutting. Accordingly, the invention has industrial applicability.

## Claims

1. A radius end mill comprising:
an end mill body which is rotated around an axis thereof;
a chip discharge flute being provided at an outer periphery of a tip portion of the end mill body;
a gash being provided at a tip portion of the chip discharge flute;
a rake face being formed on a wall face facing an end-mill rotational direction in the chip discharge flute or the gash;
a cutting edge being formed on the rake face;
the cutting edge including an end cutting edge, an outer peripheral cutting edge, and a convex circular-arc-shaped corner cutting edge;
the end cutting edge being formed at a side ridge portion on the tip portion of the rake face;
the outer peripheral cutting edge being formed at a side ridge portion on the outer peripheral side of the rake face;
the convex circular-arc-shaped corner cutting edge being formed at a corner side ridge portion formed by the end cutting edge and the outer peripheral cutting edge;
a chip breaker being formed on a side ridge portion of the rake face at least along the corner cutting edge so as to have a convex circular-arc shape extending parallel to the corner cutting edge at the portion along the corner cutting edge;
the chip breaker having a groove bottom face lower than respect to the rake face, and a groove wall face which rises from the groove bottom face and is connected to the rake face; and
at both ends of the chip breaker on the side of the end cutting edge and on the side of the outer peripheral cutting edge, the groove bottom face rising to connect with the rake face in a direction along the end cutting edge or the outer peripheral cutting edge at the end, or the groove bottom face extends so as to be parallel to the rake face and the chip breaker is opened.

2. The radius end mill according to Claim 1, wherein the chip breaker is formed such that the groove width thereof becomes small at one end thereof on the side of at least one of the end cutting edge and the outer peripheral cutting edge.

3. The radius end mill according to Claim 1, wherein the chip breaker extends to the outer peripheral cutting edge.

4. The radius end mill according to Claim 1, wherein the corner cutting edge has a positive cutting edge inclination angle, and is formed in a spiral shape which is twisted toward the rear side in the end-mill rotational direction along a partial doughnut-shaped convex curve which is formed by a rotational locus when a convex circular arc formed by the corner cutting edge as seen from a direction facing the rake face is rotated around the axis as it approaches the outer peripheral cutting edge from the end cutting edge.

5. The radius end mill according to Claim 4, wherein the cutting edge is set to have a constant cutting edge inclination angle in a portion in which the chip breaker is formed.

6. The radius end mill according to Claim 4, wherein the groove bottom face of the chip breaker is inclined toward the rear side in the end-mill rotational direction as it approaches the outer peripheral cutting edge from the end cutting edge in a portion along at least a portion of the corner cutting edge, and a slope toward the rear side in the end-mill rotational direction is formed in the shape of a twist face which gradually becomes large as it approaches the center of the convex circular arc formed by the corner cutting edge from the corner cutting edge.

7. The radius end mill according to Claim 6, wherein the cutting edge is set to have a constant normal (right) rake angle in the portion in which the chip breaker is formed.

8. The radius end mill according to any one of Claims 1 to 7, wherein the tip portion of the end mill body is formed with an insert mounting seat, a cutting insert having a flat plate-shaped insert body to be detachably attached to the insert mounting seat, and the insert body is formed with the rake face, the cutting edge, and the chip breaker.

9. A cutting insert to be detachably attached to an insert mounting seat formed at a tip portion of the end mill body in the radius end mill according to Claim 8, comprising:
the cutting insert having the flat plate-shaped insert body,
wherein the insert body is formed with the rake face, the cutting edge, and the chip breaker.
